# EUROPEAN PATENT APPLICATION

(11) **EP 4 524 289 A1**
(43) Date of publication of application: **19.03.2025**
(21) Application number: 24816691.0
(22) Date of filing: 10.06.2024
(51) Int. Cl.: C25B 9/00, C25B 1/23, C25B 9/015, C25B 11/032, H02J 3/38, H02J 15/00

(54) **ENERGY UTILIZATION SYSTEM, AND METHOD FOR MANUFACTURING CARBON-CONTAINING MATERIAL**

(30) Priority: 23.06.2023 JP 2023103581
(71) Applicant: The Doshisha, Kyoto 602-8580 (JP)
(72) Inventor: GOTO, Takuya, Kyoto-shi, Kyoto 602-8580 (JP); ISHIKAWA, Masamichi, Kyoto-shi, Kyoto 602-8580 (JP); WATANABE, Takashi, Kyoto-shi, Kyoto 602-8580 (JP); KIKUCHI, Yoshimasa, Osaka-shi, Osaka 530-0001 (JP); FURUSHO, Kazuhiro, Osaka-shi, Osaka 530-0001 (JP); TAKEDA, Nobuaki, Osaka-shi, Osaka 530-0001 (JP); KISHIKAWA, Yosuke, Osaka-shi, Osaka 530-0001 (JP); YAMAUCHI, Akiyoshi, Osaka-shi, Osaka 530-0001 (JP); ISOGAI, Tomohiro, Osaka-shi, Osaka 530-0001 (JP)
(74) Representative: Hoffmann Eitle
(86) International application number: PCT/JP2024/020974
(87) International publication number: WO 2024/262359

(57) **Abstract**

Provided are an energy utilization system and a method for producing a carbon-containing material, each capable of giving a carbon-containing material with a reduced carbon dioxide emission through minimizing the discharge of carbon dioxide. An energy utilization system (1) including: a circulation circuit (30) including a temperature adjustment section (36) that adjusts the temperature of a heating medium by using renewable energy or energy obtained from waste heat, wherein the heating medium circulates in the circulation circuit; and an electrolytic reduction apparatus (70) that performs electrolytic reduction of an electrolytic solution in which carbon dioxide is dissolved, wherein the electrolytic reduction apparatus (70) performs electrolytic reduction of the electrolytic solution temperature-adjusted through thermal contact with the heating medium, and the electrolytic reduction apparatus (70) includes: an electrolyzer casing (79) that is cylindrical and extends in a first direction; an anode (71) that is provided within the electrolyzer casing (79) and extends in the first direction; a cathode (72) that is cylindrical and positioned within the electrolyzer casing (79) and on the outside of the anode (71) as viewed in the first direction, and extends in the first direction; and an electrolytic solution passage (73) that allows the electrolytic solution to flow in the first direction between the anode (71) and the cathode (72).

## Description

### TECHNICAL FIELD

The present invention relates to an energy utilization system and a method for producing a carbon-containing material.

### BACKGROUND ART

In order to reduce the emissions of carbon dioxide and the like as a countermeasure against global warming, development of techniques for carbon recycling, which intends to reuse carbon dioxide by reducing it to convert it into carbon compounds or the like, is currently ongoing.

For example, Patent Literature 1 (JPA No. 2016-89230) suggests producing carbon materials through electrolytic reduction of carbon dioxide in a sealed reaction vessel. For example, Patent Literature 2 (JPA No. 2023-15104) suggests producing carbon monoxide and various organic compounds (any of hydrocarbons, ethers, cyclic ethers, alcohols, and carbonyl compounds) through electrolytic reduction of carbon dioxide, likewise.

### SUMMARY OF THE INVENTION

### [Technical Problem]

In order to produce carbon-containing materials from carbon dioxide for the purpose of reducing the emission of carbon dioxide, it is desired to efficiently perform electrolytic reduction of carbon dioxide while such energy usage that leads to an increased emission of carbon dioxide is prevented.

### [Solution to Problem]

An energy utilization system according to a first aspect includes: a circulation circuit; and an electrolytic reduction apparatus. The circulation circuit includes a temperature adjustment section. A heating medium circulates in the circulation circuit. The temperature adjustment section adjusts the temperature of the heating medium by using renewable energy or energy obtained from waste heat. The electrolytic reduction apparatus subjects an electrolytic solution in which carbon dioxide is dissolved to electrolytic reduction. The electrolytic reduction apparatus subjects the electrolytic solution temperature-adjusted through thermal contact with the heating medium to electrolytic reduction. The electrolytic reduction apparatus includes a casing, a first electrode, a second electrode, and an electrolytic solution passage. The casing is cylindrical, and extends in a first direction. The first electrode is provided within the casing, and extends in the first direction. The second electrode is cylindrical, and extends in the first direction. The second electrode is positioned within the casing and on the outside of the first electrode as viewed in the first direction. The electrolytic solution passage allows the electrolytic solution to flow in the first direction between the first electrode and the second electrode.

Here, the renewable energy may be, for example, energy obtained through one or more selected from the group consisting of solar power generation, wind power generation, hydroelectric power generation, biomass power generation, geothermal power generation, tidal power generation, hydrogen combustion power generation, and ammonia combustion power generation. For example, the renewable energy may be such that the amount of energy to be provided varies among different parts of a day, thus having fluctuations, in contrast to such energy as electric power supplied via a main electric power network operated by an electric power company.

Here, the waste heat is not limited, and examples thereof include heat discharged from a thermal power plant, a nuclear power plant, a chemical plant, a refinery, an incineration plant, geothermal activity, or hot spring water.

In the present energy utilization system, the temperature of the heating medium is adjusted by using renewable energy or energy obtained from waste heat. Then, the temperature-adjusted heating medium circulates in the circulation circuit, and comes into thermal contact with the electrolytic solution to adjust the temperature of the electrolytic solution in which carbon dioxide is dissolved. This results in an enhanced reduction efficiency for the electrolytic solution. In addition, the electrolytic solution flows in the first direction between the first electrode and the second electrode in the electrolytic solution passage of the electrolytic reduction apparatus. This enables electrolytic reduction of the electrolytic solution with continuous feeding of the electrolytic solution between the first electrode and the second electrode. Accordingly, an enhanced reduction efficiency for the electrolytic solution can be achieved also in that high carbon dioxide or carbonate ion concentrations can be maintained with ease in the electrolytic solution in the vicinity of the first electrode and the second electrode. Moreover, the capability of adjusting the temperature of the electrolytic solution with the heating medium temperature-adjusted by using renewable energy or energy obtained from waste heat in the electrolytic reduction of carbon dioxide enables reduction in carbon dioxide emissions through minimizing the discharge of carbon dioxide.

An energy utilization system according to a second aspect is the energy utilization system according to the second aspect, wherein the first electrode is an anode. The second electrode is a cathode.

In the present energy utilization system, carbon dioxide can be reduced on the cathode that is provided on the outside of the anode as viewed in the first direction. This enables efficient reduction of carbon dioxide because a larger surface area can be ensured for the cathode in the case that the cathode is provided on the outside of the anode than in the case that the cathode is provided on the inside of the anode.

An energy utilization system according to a third aspect is the energy utilization system according to the second aspect, wherein the anode is cylindrical and extends in the first direction. The electrolytic reduction apparatus includes a first gas passage. The first gas passage is provided on the inside of the anode as viewed in the first direction, and allows a gas generated through the oxidation reaction of the electrolytic solution to pass therethrough.

In the present energy utilization system, a gas generated through the oxidation reaction of the electrolytic solution is prevented from remaining in the original place and sent to the first direction, and hence the efficiency of the oxidation reaction on the anode can be enhanced.

An energy utilization system according to a fourth aspect is the energy utilization system according to the third aspect, wherein the anode includes an anode catalyst layer and an anode gas diffusion layer. The anode catalyst layer is cylindrical, and extends in the first direction. The anode gas diffusion layer is provided on the inside of the anode catalyst layer and on the outside of the first gas passage as viewed in the first direction. The anode gas diffusion layer is cylindrical, and extends in the first direction.

The present energy utilization system enables efficient oxidation reaction on the anode.

An energy utilization system according to a fifth aspect is the energy utilization system according to any of the second to fourth aspects, wherein the electrolytic reduction apparatus includes a second gas passage. The second gas passage is provided on the outside of the cathode and on the inside of the casing as viewed in the first direction, and allows a gas generated through the reduction reaction of the electrolytic solution to pass therethrough.

In the present energy utilization system, a gas generated through the reduction reaction of the electrolytic solution is prevented from remaining in the original place and sent to the first direction, and hence the efficiency of the reduction reaction on the cathode can be enhanced.

An energy utilization system according to a sixth aspect is the energy utilization system according to the fifth aspect, wherein the cathode includes a cathode catalyst layer and a cathode gas diffusion layer. The cathode catalyst layer is cylindrical, and extends in the first direction. The cathode gas diffusion layer is cylindrical, and extends in the first direction. The cathode gas diffusion layer is provided on the outside of the cathode catalyst layer and on the inside of the second gas passage as viewed in the first direction.

The present energy utilization system enables efficient reduction reaction on the cathode.

An energy utilization system according to a seventh aspect is the energy utilization system according to any of the first to sixth aspects, further including a heat pump. The heat pump is driven by using electric power generated with the renewable energy. A first refrigerant circulates in the heat pump. The temperature adjustment section adjusts the temperature of the heating medium with heat from the first refrigerant temperature-adjusted by the heat pump.

Since the present energy utilization system drives the heat pump by using electric power generated with the renewable energy, the heat pump driven can achieve reduced environmental loads.

An energy utilization system according to an eighth aspect is the energy utilization system according to any of the first to seventh aspects, including a heat engine. The heat engine generates electric power by using heat from the heating medium. The electrolytic reduction apparatus applies a voltage to the electrolytic solution by using electric power generated by the heat engine.

The present energy utilization system enables use of voltages for the electrolytic reduction, the voltages obtained through power generation by using heat that is derived from the heating medium and unused for the temperature adjustment for the electrolytic solution.

An energy utilization system according to a ninth aspect is the energy utilization system according to any of the first to eighth aspects, wherein the circulation circuit includes a storage section. The storage section stores heat from the heating medium as stored energy.

Even if the supply of the renewable energy or waste heat is unstable, the present energy utilization system can buffer the unstableness by storing heat from the heating medium as stored energy.

Even if the amount of the renewable energy or energy obtained from waste heat fluctuates to cause the variation of the temperature of the heating medium flowing in the circulation circuit, the temperature variation can be leveled to allow use of high-quality thermal energy. Accordingly, the temperature of the electrolytic solution to be subjected to electrolytic reduction can be adjusted to a temperature that allows the electrolytic reduction to efficiently proceed.

A method for producing a carbon-containing material according to a tenth aspect includes: adjusting the temperature of a heating medium circulating in a circulation circuit by using renewable energy or energy obtained from waste heat; adjusting the temperature of an electrolytic solution; and performing electrolytic reduction of the temperature-adjusted electrolytic solution. The electrolytic solution to be temperature-adjusted is an electrolytic solution in which carbon dioxide is dissolved. The electrolytic solution is temperature-adjusted through thermal contact with the heating medium. In performing electrolytic reduction, the electrolytic solution flows in a first direction between a first electrode that extends in the first direction and a second electrode that is cylindrical and extends in the first direction in such a manner that the second electrode shields the first electrode from the surroundings as viewed in the first direction.

Here, the renewable energy may be, for example, energy obtained through one or more selected from the group consisting of solar power generation, wind power generation, hydroelectric power generation, biomass power generation, geothermal power generation, tidal power generation, hydrogen combustion power generation, and ammonia combustion power generation. For example, the renewable energy may be such that the amount of energy to be provided varies among different parts of a day, thus having fluctuations, in contrast to such energy as electric power supplied via a main electric power network operated by an electric power company.

Here, the waste heat is not limited, and examples thereof include heat discharged from a thermal power plant, a nuclear power plant, a chemical plant, a refinery, an incineration plant, geothermal activity, or hot spring water.

In the present method for producing a carbon-containing material, the temperature of the heating medium is adjusted by using renewable energy or energy obtained from waste heat. Then, the temperature-adjusted heating medium circulates in the circulation circuit, and comes into thermal contact with the electrolytic solution to adjust the temperature of the electrolytic solution in which carbon dioxide is dissolved. This results in an enhanced reduction efficiency for the electrolytic solution. In addition, the electrolytic reduction is performed while the electrolytic solution is allowed to flow in the first direction between the first electrode and the second electrode. This enables electrolytic reduction of the electrolytic solution with continuous feeding of the electrolytic solution between the first electrode and the second electrode. Accordingly, an enhanced reduction efficiency for the electrolytic solution can be achieved also in that high carbon dioxide or carbonate ion concentrations can be maintained with ease in the electrolytic solution in the vicinity of the first electrode and the second electrode. Moreover, adjusting the temperature of the electrolytic solution with the heating medium temperature-adjusted by using renewable energy or energy obtained from waste heat in the electrolytic reduction of carbon dioxide enables reduction in carbon dioxide emissions through minimizing the discharge of carbon dioxide.

A method for producing a carbon-containing material according to an eleventh aspect is the method for producing a carbon-containing material according to the tenth aspect, wherein the first electrode is an anode. The second electrode is a cathode.

In the present method for producing a carbon-containing material, carbon dioxide can be reduced on the cathode that is provided on the outside of the anode as viewed in the first direction. This enables efficient reduction of carbon dioxide because a larger surface area can be ensured for the cathode in the case that the cathode is provided on the outside of the anode than in the case that the cathode is provided on the inside of the anode.

A method for producing a carbon-containing material according to twelfth aspect is the method for producing a carbon-containing material according to the tenth or eleventh aspect, wherein the temperature of the heating medium is adjusted with heat from a first refrigerant by using a heat pump that allows the first refrigerant to circulate therein. The heat pump is driven by using electric power generated with the renewable energy.

Since the heat pump is driven by using electric power generated with the renewable energy in the present method for producing a carbon-containing material, the heat pump driven can achieve reduced environmental loads.

A method for producing a carbon-containing material according to thirteenth aspect is the method for producing a carbon-containing material according to any of the tenth to twelfth aspects, further including generating electric power with a heat engine by using heat from the heating medium. In performing electrolytic reduction, a voltage is applied to the electrolytic solution by using electric power generated with the heat engine.

The present method for producing a carbon-containing material enables use of electric power for the electrolytic reduction, the electric power obtained through power generation by using heat that is derived from the heating medium and unused for the temperature adjustment for the electrolytic solution.

A method for producing a carbon-containing material according to a fourteenth aspect is the method for producing a carbon-containing material according to the thirteenth aspect, wherein the circulation circuit includes a storage section that stores heat from the heating medium as stored energy.

Even if the supply of the renewable energy or waste heat is unstable, the present method for producing a carbon-containing material can buffer the unstableness by storing heat from the heating medium as stored energy.

Even if the amount of the renewable energy or energy obtained from waste heat fluctuates to cause the variation of the temperature of the heating medium flowing in the circulation circuit, the temperature variation can be leveled to allow use of high-quality thermal energy. Accordingly, the temperature of the electrolytic solution to be subjected to electrolytic reduction can be adjusted to a temperature that allows the electrolytic reduction to efficiently proceed.

An electrolytic reduction apparatus according to supplement 1 is an electrolytic reduction apparatus for performing electrolytic reduction of an electrolytic solution in which carbon dioxide is dissolved, the electrolytic reduction apparatus including: a casing that is cylindrical and extends in a first direction; an anode that is provided within the casing and extends in the first direction; a cathode that is cylindrical and positioned within the casing and on the outside of the anode as viewed in the first direction, and extends in the first direction; and an electrolytic solution passage that allows the electrolytic solution to flow in the first direction between the anode and the cathode.in

### BRIEF DESCRIPTION OF THE DRAWINGS

[Figure 1] Figure 1 is a schematic configurational diagram of an energy utilization system according to a first embodiment.
[Figure 2] Figure 2 is a schematic configurational diagram of a carbon dioxide processor.
[Figure 3] Figure 3 is a partial cross-sectional view of the electrolytic reduction apparatus viewed in the longitudinal direction.
[Figure 4] Figure 4 is a schematic configurational diagram of a network that is used in a microgrid system.

### DESCRIPTION OF EMBODIMENTS

Hereinafter, energy utilization systems and methods for producing a material according to embodiments of the present invention will be described with examples.

### (1) First embodiment

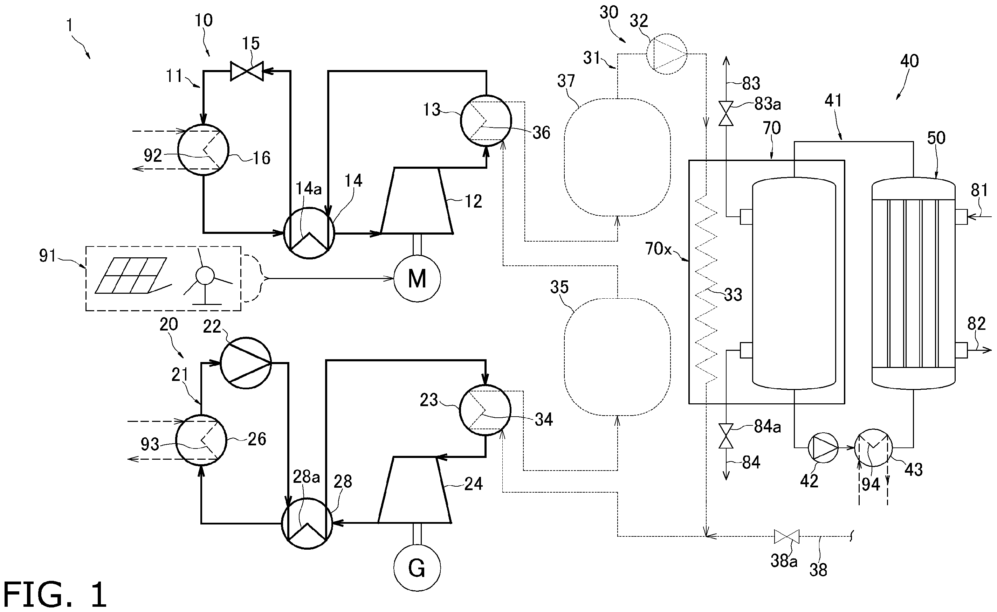

An energy utilization system 1 is a system that gives thermal energy, electric power, and a carbon-containing material by using renewable energy and utilizes them, and includes, as illustrated in Figure 1, a heat pump 10, a heat engine 20, a heat utilization cycle 30, and a carbon dioxide processor 40.

### (1-1) Heat pump

The heat pump 10 includes a first refrigerant circuit 11 filled with a first refrigerant. The first refrigerant may be, for example, R1233zd (E), R1234yf, R1234ze (E), R1234ze (Z), R134a, R32, R410a, R245fa, water, or carbon dioxide. Such a first refrigerant allows the heat pump 10 to be efficiently driven in heating the heating medium to a temperature range of less than 200°C. The first refrigerant circuit 11 includes a first compressor 12, a first high-temperature heat exchanger 13, an expansion valve 15, a first low-temperature heat exchanger 16, and a first intermediate heat exchanger 14.

For the first compressor 12, renewable energy supplied via a renewable energy supply section 91 is used as a motive power source. For drive control of the heat pump 10, renewable energy supplied via the renewable energy supply section 91 may be used alone as the driving source; alternatively, both the renewable energy and electric power supplied from an electric power company may be used as the driving source. In the case where both the renewable energy and electric power supplied from an electric power company are used, it is preferable that electric power from the renewable energy be used more than the electric power supplied from an electric power company.

The renewable energy is, for example, energy obtained through solar power generation, wind power generation, hydroelectric power generation, biomass power generation, geothermal power generation, tidal power generation, hydrogen combustion power generation, or ammonia combustion power generation. Among them, solar power generation, wind power generation, and geothermal power generation are preferred because relatively steady power generation can be achieved in combination with reduced emissions of carbon dioxide.

The first high-temperature heat exchanger 13 allows the first refrigerant flowing through the first high-temperature heat exchanger 13 and a first heating medium flowing through a first high-temperature-utilizing heat exchange section 36 in the heat utilization cycle 30 to exchange heat with each other without mixing together, thereby heating the first heating medium and cooling the first refrigerant. The first refrigerant that has passed through the first high-temperature heat exchanger 13 is sent to an intermediate heat exchange section 14a, and allowed to exchange heat with the first refrigerant flowing through the intermediate heat exchanger 14 without mixing together. The first refrigerant that has passed through the intermediate heat exchange section 14a is depressurized in the expansion valve 15, and sent to the first low-temperature heat exchanger 16.

The first low-temperature heat exchanger 16 allows the first refrigerant flowing through the first low-temperature heat exchanger 16 and a discharge gas flowing through a waste heat supply section 92 to exchange heat with each other without mixing together, thereby heating the first refrigerant and cooling the discharge gas. To the waste heat supply section 92, a discharge gas having a high temperature of 80°C or more and 120°C or less, such as a burnt gas from a factory or the like, may be applied. The supply of thermal energy from waste heat to the waste heat supply section 92 is regulated with a discharge gas transporter, which is not shown.

The first refrigerant that has passed through the first low-temperature heat exchanger 16 is sent to the first intermediate heat exchanger 14. In the first intermediate heat exchanger 14, as described above, the first refrigerant flowing through the first intermediate heat exchanger 14 is heated by the first refrigerant flowing through the first intermediate heat exchange section 14a. The first refrigerant that has passed through the first intermediate heat exchanger 14 is inspired into the first compressor 12.

### (1-2) Heat engine

The heat engine 20 includes a second refrigerant circuit 21 filled with a second refrigerant. The second refrigerant may be, for example, R1233zd (E), R1234yf, R1234ze (E), R1234ze (Z), R134a, R32, R410a, R245fa, water, or carbon dioxide.

The second refrigerant circuit 21 includes a second pump 22, a second high-temperature heat exchange section 23, an expander 24, a second low-temperature heat exchanger 26, and a second intermediate heat exchanger 28.

The second pump 22 forms a flow of the second refrigerant in the second refrigerant circuit 21. The second refrigerant that has flowed out of the second pump 22 is sent to the second high-temperature heat exchange section 23 via a second intermediate heat exchange section 28a.

The second high-temperature heat exchange section 23 allows the second refrigerant flowing through the second high-temperature heat exchange section 23 and the first heating medium flowing through the low-temperature-utilizing heat exchanger 34 in the heat utilization cycle 30 to exchange heat with each other without mixing together, thereby heating the second refrigerant and cooling the first heating medium. The second refrigerant that has passed through the second high-temperature heat exchange section 23 is sent to the expander 24. The second refrigerant sent to the expander 24 is depressurized, and sent to the second intermediate heat exchanger 28. The expander 24 generates electric power by using energy recovered when the second refrigerant is depressurized. The electric power generated by the expander 24 can be used, for example, as a motive power source for the first compressor 12 in the heat pump 10 or an electric power supply for a voltage to be applied in the electrolytic reduction apparatus 70.

The second intermediate heat exchanger 28 allows the second refrigerant flowing through the second intermediate heat exchanger 28 and the second refrigerant flowing through the second intermediate heat exchange section 28a from the second pump 22 toward the second high-temperature heat exchange section 23 to exchange heat with each other without mixing together. The second low-temperature heat exchanger 26 allows the second refrigerant flowing through the second low-temperature heat exchanger 26 and air fed from the outside via a second refrigerant cooling section 93 to exchange heat with each other. The second refrigerant that has passed through the second low-temperature heat exchanger 26 is sent to the second pump 22.

### (1-3) Heat utilization cycle

The heat utilization cycle 30 includes a heat utilization circuit 31 filled with a heating medium. In order to enable storage of high-temperature thermal energy, the heating medium may be, for example, a latent heat storage material such as a mixed fluid containing sand or rock together with air, water, a thermal oil, an ionic liquid, and a molten salt. The heat utilization circuit 31 includes a heating medium pump 32, a electrolytic reduction temperature control section 33, a low-temperature-utilizing heat exchanger 34, a pressurizing line 38, a low-temperature tank 35, a high-temperature-utilizing heat exchange section 36, and a high-temperature tank 37.

The heating medium pump 32 generates a flow to circulate the heating medium into the heat utilization cycle 30. The heating medium that has passed through the heating medium pump 32 is sent to the electrolytic reduction temperature control section 33. The electrolytic reduction temperature control section 33 passes through a thermostatic vessel 33x in a thermostatic container 70x of the electrolytic reduction apparatus 70, which is described later. The thermostatic vessel 33x is filled with a heat retention medium. The heating medium heats the heat retention medium in the thermostatic vessel 33x. The heat retention medium heats an electrolytic solution in an electrolyzer casing 79. The heating medium sent to the electrolytic reduction temperature control section 33 adjusts the temperature of the electrolytic solution to be subjected to electrolytic reduction, for example, by heating the electrolytic solution in the electrolytic reduction apparatus 70.

The heating medium that has passed through the electrolytic reduction temperature control section 33 is sent to the low-temperature-utilizing heat exchanger 34. The pressurizing line 38, which allows the heating medium to be pressure-injected into the heat utilization circuit 31, is provided between the electrolytic reduction temperature control section 33 and the low-temperature-utilizing heat exchanger 34 to connect them. The pressurizing line 38 is provided with an on/off valve 38a that can be controlled to open or close. The heating medium circulating in the heat utilization circuit 31 is pressurized through the pressurizing line 38, and as a result, the volatilization of the heating medium is inhibited even at high temperature. In the case where water is used as the heating medium, for example, the volatilization is inhibited even over 100°C.

The low-temperature-utilizing heat exchanger 34 allows the heating medium flowing through the low-temperature-utilizing heat exchanger 34 and the second refrigerant flowing through the second high-temperature heat exchange section 23 in the heat engine 20 to exchange heat with each other without mixing together, thereby heating the second refrigerant and cooling the heating medium. The heating medium that has passed through the low-temperature-utilizing heat exchanger 34 is sent to the low-temperature tank 35. The temperature of the heating medium to be reserved in the low-temperature tank 35 is, for example, 80°C or higher and 120°C or lower, and may be 90°C or higher and 110°C or lower. The heating medium that has passed through the low-temperature tank 35 is sent to the high-temperature-utilizing heat exchange section 36.

The heating medium flowing through the high-temperature-utilizing heat exchange section 36 exchanges heat with the first refrigerant flowing through the first high-temperature heat exchanger 13 in the heat pump 10 without mixing together, thereby being heated. The heating medium that has passed through the high-temperature-utilizing heat exchange section 36 is sent to the high-temperature tank 37. The temperature of the heating medium to be reserved in the high-temperature tank 37 is, for example, 120°C or higher and 150°C or lower, and may be 130°C or higher and 140°C or lower. The heating medium that has passed through the high-temperature tank 37 is sent to the heating medium pump 32.

It is preferable that the low-temperature tank 35 and the high-temperature tank 37 be each shielded from the surroundings with a heat-insulating material.

### (1-4) Carbon dioxide processor

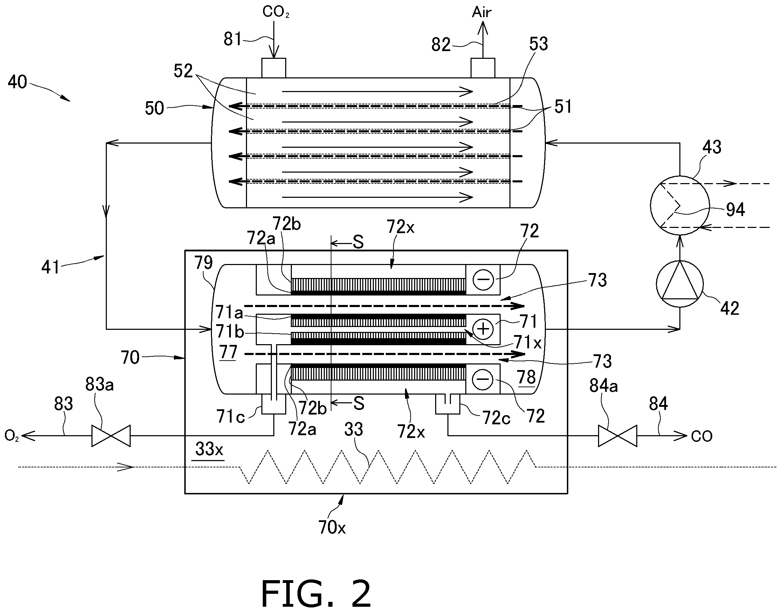

As illustrated in Figure 2, the carbon dioxide processor 40 is an apparatus for giving a carbon-containing material by dissolving carbon dioxide in an electrolytic solution for recovery and at the same time performing electrolytic reduction with the electrolytic solution heated to a proper temperature with the heating medium circulating in the heat utilization cycle 30.

The carbon dioxide processor 40 includes a carbon dioxide recovery apparatus 50, an electrolytic reduction apparatus 70, an electrolytic solution pump 42, and an electrolytic solution heat exchanger 43, and is provided with an electrolytic solution circuit 41 that allows an electrolytic solution to circulate therein.

The electrolytic solution pump 42 allows the electrolytic solution to circulate in the electrolytic solution circuit 41 by taking in and sending out the electrolytic solution. The electrolytic solution that has flowed out of the electrolytic solution pump 42 is cooled in the electrolytic solution heat exchanger 43 through heat exchange with a cooling medium such as water and air fed from an external cooling source to an electrolytic solution cooling section 94. The temperature of the cooling medium to be fed to the electrolytic solution cooling section 94 may be, for example, 15°C or higher and 35°C or less, and is preferably 20°C or higher and 30°C or less. The electrolytic solution cooled is sent to the carbon dioxide recovery apparatus 50. Carbon dioxide recovered in the carbon dioxide recovery apparatus 50 is readily soluble in the electrolytic solution because the electrolytic solution to be sent to the carbon dioxide recovery apparatus 50 has been sufficiently cooled. The electrolytic solution that has dissolved carbon dioxide therein in the carbon dioxide recovery apparatus 50 is sent to the electrolytic reduction apparatus 70. The carbon dioxide contained in the electrolytic solution sent to the electrolytic reduction apparatus 70 is subjected to electrolytic reduction and thereby converted into a carbon-containing material.

The electrolytic solution may be an electrolytic solution of choice for the type of a carbon-containing material to be obtained through electrolytic reduction of the electrolytic solution, such as one or more selected from the group consisting of imidazolium ionic liquids, aromatic ionic liquids, pyrrolidinium ionic liquids, ammonium ionic liquids, piperidinium ionic liquids, and quaternary phosphonium ionic liquids. The electrolytic solution may be preferably an ionic liquid having high solubility for carbon dioxide and low viscosity, or an ionic liquid solution to which an aqueous solution or the like containing an additive such as a supporting electrolyte and a basic catalyst has been added. The electrolytic solution may be an electrolytic solution with a sufficiently wide electrochemical window to the electrolytic reaction of carbon dioxide and water.

Examples of ionic liquids that can constitute such a preferred electrolytic solution include [BuMePyrr][TFO], [BMIm][TFO], [DEME][BF₄], [P2225][TFSI], [BMIM][BF₄], [BMIM][TFSI], and [PP13][TFSI]. Examples of the supporting electrolyte include MCl M₂CO₃, MHCO₃, MBF₄, MPF₆, MClO₄, MAsF₆, MTf, MTFSI, M(CF₃SO₂)₂N, and MHPO₄ (M = Li, Na, K, Rb, Cs). Examples of the basic catalyst include LiOH, NaOH, KOH, CsOH, and Ca(OH)₂. Such an electrolytic solution is preferred in that it allows not only operations at room temperature but also operations under a high-temperature environment at 80°C or more and 150°C or less for enhanced efficiency. In addition, such an electrolytic solution is preferred in that it has high absorbability for carbon dioxide and allows continuous operations of recovery and decomposition of carbon dioxide. Furthermore, such an electrolytic solution is preferred in that since being liquid at room temperature and having a relatively low vapor pressure, the electrolytic solution undergoes less escaping and loss due to the evaporation of the electrolytic solution in operations, and air sent to the outside of the apparatus is substantially free of chemicals derived from the electrolytic solution except water vapor.

### (1-4-1) Carbon dioxide recovery apparatus

The carbon dioxide recovery apparatus 50 is an apparatus that recovers carbon dioxide fed from the outside via a carbon dioxide feed line 81 and allow the electrolytic solution to dissolve the carbon dioxide therein. The carbon dioxide feed line 81 is a passage to recover carbon dioxide for a discharge gas rich in carbon dioxide, such as a burnt gas from a factory or the like. In the present embodiment, a gas containing not only carbon dioxide but also moisture flows through the carbon dioxide feed line 81, and the gas is fed to the carbon dioxide recovery apparatus 50. In this case, the gas may be the environmental atmosphere, which contains low-concentration carbon dioxide. The amount of carbon dioxide fed to the carbon dioxide feed line 81 is regulated with a carbon dioxide transporter, which is not shown.

The carbon dioxide recovery apparatus 50 includes a plurality of absorption passages 51 through which the electrolytic solution passes, a plurality of carbon dioxide passages 52 through which carbon dioxide fed from the carbon dioxide feed line 81 passes, and hollow fiber membranes 53 each provided between an absorption passage 51 and a carbon dioxide passage 52.

The carbon dioxide recovery apparatus 50 is configured in such a manner that the direction of the flowing of the electrolytic solution in the absorption passages 51 and the direction of the flowing of carbon dioxide in the carbon dioxide passages 52 are opposite to each other. This configuration allows the electrolytic solution to take up more carbon dioxide that has passed through hollow fiber membranes 53 as the electrolytic solution proceeds in an absorption passage 51. The electrolytic solution containing carbon dioxide may be one containing carbon dioxide gas dissolved therein, or one containing carbonate ions or hydrogen carbonate ions, or one containing carbon dioxide gas dissolved therein and carbonate ions or hydrogen carbonate ions.

The electrolytic solution that has taken up much carbon dioxide flows through the electrolytic solution circuit 41, and is fed to the electrolytic reduction apparatus 70. On the downstream side of the carbon dioxide passage 52, clean air with reduced carbon dioxide concentration is gathered in an air discharge line 82, and set out of the carbon dioxide recovery apparatus 50.

### (1-4-2) Electrolytic reduction apparatus

The electrolytic reduction apparatus 70 is an apparatus that gives a carbon-containing material by subjecting the electrolytic solution containing carbon dioxide to electrolytic reduction. The electrolytic reduction apparatus 70 of the present embodiment preferably includes no solid electrolyte membrane.

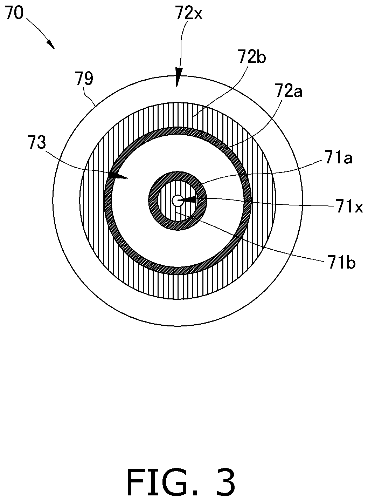

As illustrated in Figure 2 and Figure 3, which is a cross-sectional view of the SS cross-section in Figure 2, the electrolytic reduction apparatus 70 includes an electrolyzer casing 79, a thermostatic vessel 33x, a thermostatic container 70x, an anode 71, a cathode 72, an electrolytic solution passage 73, a first recovery line 83, and a second recovery line 84.

The electrolytic solution containing carbon dioxide passes through the electrolyzer casing 79. The electrolyzer casing 79 is configured as a generally cylindrical shape in which the direction of passing of the electrolytic solution corresponds to the longitudinal direction and the axial direction. Provided within the electrolyzer casing 79 are an upstream region 77, to which the electrolytic solution that has flowed out of the carbon dioxide recovery apparatus 50 is fed, and a downstream region 78, through which the electrolytic solution after being subjected to electrolytic reduction passes before flowing out of the electrolyzer casing 79.

The thermostatic container 70x is a container to contain the electrolyzer casing 79, the thermostatic vessel 33x, and the electrolytic reduction temperature control section 33 in the heat utilization cycle 30 within the container. The thermostatic vessel 33x is configured to fill a space within the thermostatic container 70x and external to the electrolyzer casing 79 with a heat retention medium. The heat retention medium may be water or a metal or the like, without limitation. The heat retention medium in the thermostatic vessel 33x is heated through heat exchange with the heating medium flowing through the electrolytic reduction temperature control section 33 in the heat utilization cycle 30. The heat retention medium thus heated heats the electrolytic solution within the electrolyzer casing 79 through thermal contact with the electrolyzer casing 79. Thereby, the temperature of the electrolytic solution is regulated to a temperature that allows efficient electrolytic reduction.

Within the electrolyzer casing 79, the anode 71 is provided in the vicinity of the center as viewed in the longitudinal direction of the electrolyzer casing 79. The anode 71 extends along the longitudinal direction of the electrolyzer casing 79 between the upstream region 77 and the downstream region 78 in the electrolyzer casing 79. As the anode 71 is viewed in the longitudinal direction of the electrolyzer casing 79, an anode recovery line 71x is provided on the inside of the anode 71 in the radial direction. The anode 71 includes an anode gas diffusion layer 71b provided to form a cylindrical shape on the outside of the anode recovery line 71x in the radial direction and an anode catalyst layer 71a provided to form a cylindrical shape on the outside of the anode gas diffusion layer 71b in the radial direction. The anode recovery line 71x, the anode gas diffusion layer 71b, and the anode catalyst layer 71a each extend along the longitudinal direction of the electrolyzer casing 79. The anode recovery line 71x has a part extending toward the outside in the radial direction to penetrate through a part of the electrolytic solution passage 73 and a part of the cathode 72 in the radial direction and further penetrate through a frame part of the electrolyzer casing 79 in the radial direction, thereby being connected to an anode communication part 71c. To the anode communication part 71c, the first recovery line 83 is connected. The position of the anode communication part 71c is not limited, and the anode communication part 71c may be positioned, for example, on the upstream side in the electrolyzer casing 79.

On the anode 71, as shown in the following formula (1), oxidation reaction of water occurs and oxygen and hydrogen ions are formed:

2H₂O → 4H⁺ + O₂ + 4e⁻ ··· (1)

Silver microparticles, a platinum mesh, porous nickel, carbon felt, or the like can be preferably used for the anode catalyst layer 71a for capability of forming oxidation reaction products at high electric current densities, stability to oxidation reaction, and easiness in ensuring a large surface area.

Graphite or the like can be preferably used for the anode gas diffusion layer 71b for capability of joining to the catalyst layer with high strength, high electric conductivity, and superior isotropy due to small and homogeneous particles.

The cathode 72 is cylindrically provided on the outside of the anode 71 apart from the outer periphery thereof and on the inside of the outer frame of the electrolyzer casing 79 as viewed in the longitudinal direction of the electrolyzer casing 79. The cathode 72 extends to form a cylindrical shape along the longitudinal direction of the electrolyzer casing 79 between the upstream region 77 and the downstream region 78 in the electrolyzer casing 79. The cathode 72 includes a cathode catalyst layer 72a that constitutes the inner periphery part of the cathode 72 and a cathode gas diffusion layer 72b provided to form a cylindrical shape on the outside of the cathode catalyst layer 72a in the radial direction. As the cathode 72 is viewed in the longitudinal direction of the electrolyzer casing 79, a cathode recovery line 72x is provided to form a cylindrical shape on the outside of the cathode 72 in the radial direction and on the inside of the frame of the electrolyzer casing 79. The cathode catalyst layer 72a, the cathode gas diffusion layer 72b, and the cathode recovery line 72x each extend along the longitudinal direction of the electrolyzer casing 79. The cathode recovery line 72x penetrates through a frame part of the electrolyzer casing 79 to the outside in the radial direction, and is connected to a cathode communication part 72c. The cathode communication part 72c is connected to the second recovery line 84. The position of the cathode communication part 72c is not limited, and the cathode communication part 72c may be positioned, for example, on the downstream side in the electrolyzer casing 79.

On the cathode 72, reduction reaction of carbon dioxide occurs. Specifically, as shown in a formula (2) given below, carbon dioxide, hydrogen ions, and electrons react together to generate carbon monoxide as a carbon-containing material and water. For some electrolysis conditions, hydrogen may be further generated.

2CO₂ + 4H⁺ + 4e⁻ → 2CO + 2H₂O··· (2)

For the cathode catalyst layer 72a, a composite material membrane or the like, for example, containing Cu nanocrystals having (100) planes at a high proportion can be preferably used.

Graphite or the like can be preferably used for the cathode gas diffusion layer 72b for capability of joining to the catalyst layer with high strength, high electric conductivity, and superior isotropy due to small and homogeneous particles.

In the present embodiment, the cathode 72 is provided to form a cylindrical shape on the outside of the anode 71 in the radial direction, and hence a structure is achieved that can readily ensure that the surface area with the occurrence of reduction reaction on the cathode 72 is larger than the surface area with the occurrence of oxidation reaction on the anode 71. This structure can efficiently give a carbon-containing material resulting from reduction of carbon dioxide.

The electrolytic solution passage 73 is a part provided to form a tubular shape on the outside of the anode 71 and on the inside of the cathode 72 as viewed in the longitudinal direction of the electrolyzer casing 79, and a cylindrical part that allows the electrolytic solution to flow along the longitudinal direction of the electrolyzer casing 79. When passing through the electrolytic solution passage 73, the electrolytic solution is electrolyzed through voltage application between the anode 71 and the cathode 72. For the electrolytic solution in the electrolytic solution passage 73, through the flow formed by the electrolytic solution pump 42, the electrolytic solution in an unelectrolyzed state can be continuously fed to the electrolytic solution passage 73 and an electrolyzed part of the electrolytic solution can be discharged from the electrolytic solution passage 73. This enables efficient electrolytic reduction.

The first recovery line 83 is a passage that is connected to the anode communication part 71c and sends products generated through electrolysis of the electrolytic solution on the anode 71 to the outside for recovery of them. An on/off valve 83a is provided in the middle of the first recovery line 83. As necessary, a vacuum pump or the like, which is not shown, is provided in the first recovery line 83, allowing recovery of reaction products and others.

The second recovery line 84 is a passage that is connected to the cathode communication part 72c and sends products generated through electrolysis of the electrolytic solution on the cathode 72 to the outside for recovery of them. An on/off valve 84a is provided in the middle of the second recovery line 84. As necessary, a vacuum pump or the like, which is not shown, is provided in the second recovery line 84, allowing recovery of reaction products and others.

The electric power for a voltage to be applied between the anode 71 and the cathode 72 in electrolytic reduction may be one given by the expander 24.

### (1-5) Features of first embodiment

In the energy utilization system 1 of the present embodiment, the heat pump 10 is driven with renewable energy. In contrast to electric power provided by common electric power companies, electric power given with such renewable energy varies among different parts of a day, and the supply may be unstable. However, the heat pump 10 allows renewable energy to be used in a sufficiently effective manner by converting the renewable energy into heat to be stored in the heat utilization cycle 30.

In addition, in the energy utilization system 1, the heat stored by the heat pump 10 in the heat utilization cycle 30 is used for heating the second refrigerant to recover motive power in the expander 24, allowing electric power to be generated. Moreover, the electric power given by the expander 24 can be used for voltage application in the electrolytic reduction apparatus 70.

In the energy utilization system 1, the heat stored by the heat pump 10 in the heat utilization cycle 30 can be used for heating the electrolytic solution in the electrolytic reduction apparatus 70, allowing the temperature of the electrolytic solution to be regulated. In the present embodiment, by heating the electrolytic solution, the absolute value of the potential required for the electrolytic reduction can be decreased, and in addition the decrease in the viscosity of the electrolytic solution allows the electroconductivity to be increased. These enable efficient electrolytic reduction.

Furthermore, the electrolytic reduction apparatus 70 can provide a carbon-containing material with use of carbon dioxide derived from a discharge gas or dilute carbon dioxide in the atmosphere.

Thus, a useful carbon-containing material derived from carbon dioxide can be efficiently obtained in combination with achieving reduction in environmental loads caused by carbon dioxide and effective use of renewable energy.

In the present embodiment, the cathode 72 is provided to form a cylindrical shape on the outside of the anode 71 in the radial direction in the electrolytic reduction apparatus 70, and as a result has a sufficiently larger surface area than the anode 71 has. Thereby, a carbon-containing material resulting from reduction of carbon dioxide can be efficiently obtained.

The electrolytic reduction apparatus 70 has a structure in which the electrolytic solution is continuously fed between the anode 71 and the cathode 72 and an electrolyzed part of the electrolytic solution is continuously discharged. This structure prevents the surface of the anode 71 from remaining covered with products generated through the reaction, prevents the surface of the cathode 72 from remaining covered with products generated through the reaction, and thus enables electrolysis in a continuous and efficient manner.

### (2) Additional embodiments

### (2-1) Additional embodiment A

For the above embodiment, the case where carbon monoxide is obtained as a carbon-containing material has been described as an example.

However, the carbon-containing material that is obtained by reducing carbon dioxide is not limited, and, for example, one or more selected from the carbon monoxide, diamond, graphite, glassy carbon, amorphous carbon, carbon nanotubes, carbon nanohorns, graphene, and metal carbides can be obtained with different conditions for the electrolytic solution, the electrode materials, and so on.

If water is contained in the electrolytic solution to be electrolyzed in addition to carbon dioxide, various organic compounds can be obtained through electrolytic reduction.

Examples of the organic compounds include hydrocarbons, ethers, cyclic ethers, alcohols, and carbonyl compounds, more specifically, one or more selected from the group consisting of methane, methanol, ethane, ethylene, acetylene, ethanol, formic acid, formaldehyde, oxalic acid, acetic acid, propane, propylene, propanol, butane, butene, butanol, acetone, benzene, toluene, and xylene.

If nitrogen is additionally contained in the electrolytic solution to be electrolyzed, amines and the like can be further obtained.

### (2-2) Additional embodiment B

For the above embodiment, the case where one electrolytic reduction apparatus 70 is provided for the flow of the electrolytic solution has been described as an example.

However, a plurality of electrolytic reduction apparatuses 70 may be disposed in parallel for the flow of the electrolytic solution. As a result, the electrolytic reduction can be performed in more places, and hence the scale of processing can be controlled.

### (2-3) Additional embodiment C

For the energy utilization system 1 according to the above embodiment, the case where the first refrigerant circulating through the heat pump 10 driven with renewable energy heats the heating medium circulating in the heat utilization cycle 30 and the heating medium circulating in the heat utilization cycle 30 heats the electrolytic solution in the electrolytic reduction apparatus 70 has been described as an example.

However, the energy utilization system 1 is not limited to a mode of heating the electrolytic solution in the electrolytic reduction apparatus 70, and may be in a mode of cooling the electrolytic solution in the electrolytic reduction apparatus 70, or be configured to be switchable between heating and cooling of the electrolytic solution in the electrolytic reduction apparatus 70.

In this case, the energy utilization system 1 may be such that the first refrigerant circulating through the heat pump 10 driven with renewable energy cools the heating medium circulating in the heat utilization cycle 30, or be configured to be switchable between heating and cooling.

The lowering of the solubility of carbon dioxide in the electrolytic solution can be reduced by reducing the temperature elevation of the electrolytic solution. If any side reaction occurs in the electrolytic reduction, the reaction rate of the side reaction can be reduced.

Furthermore, in order to cool the electrolytic solution, a passage through which a cooling medium such as water and air flows may be provided to allow the cooling medium fed from an external cooling source to pass through the thermostatic vessel 33x in the thermostatic container 70x.

### (2-4) Additional embodiment D

The energy utilization system 1 of the first embodiment is not limited in terms of utilization, and can be used, for example, in a microgrid system.

The microgrid system is an energy system that integrates distributed energy resources (DER) such as distributed energy and energy-storing facilities and an energy network together at a certain scale and operates them. For example, the microgrid system may be a system that is completely separated from a main electric power network operated by an electric power company and constantly performs independent energy operations, or a system that is connected to a main electric power network operated by an electric power company in normal times and unconnected to perform independent energy operations in times of emergency, such as times of disaster.

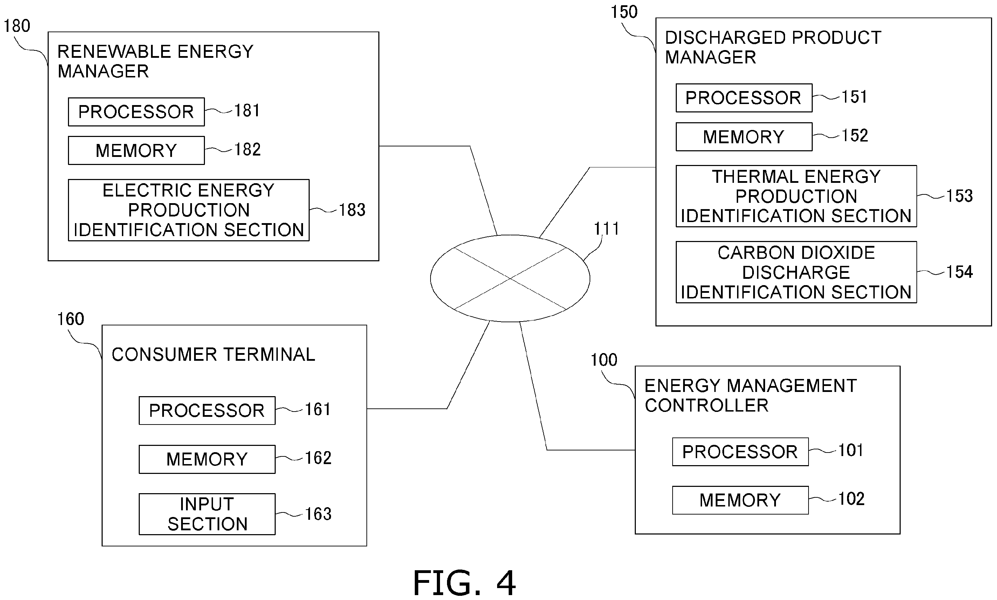

Figure 4 illustrates an exemplary network configuration of a microgrid system including the energy utilization system 1 of the first embodiment.

For example, the microgrid system may be one including: a renewable energy supply section 91 such as a solar power plant, a wind power plant, and a hydroelectric power plant; a renewable energy manager 180 that manages renewable energy; a heat pump 10; a heat engine 20; a heat utilization cycle 30; a waste heat supply section 92; a carbon dioxide processor 40 including a carbon dioxide recovery apparatus 50 and an electrolytic reduction apparatus 70; a discharged product supply section, not shown, such as a thermal power plant, a nuclear power plant, a plant, and a hot spring; a discharged product manager 150 that manages the discharged product supply section; a consumer facility, not shown, that consumes electric power energy generated by the heat engine 20; a consumer terminal 160 that manages the consumer facility; an energy network facility, not shown, that links those facilities; an energy management controller 100 that properly controls supply and consumption of energy; and a communication network 111 that communicably connects the renewable energy manager 180, the consumer terminal 160, the energy management controller 100, and so on.

The renewable energy manager 180 includes, for example, a processor 181 such as a CPU, a memory 182 such as a ROM and a RAM, and an electric energy production identification section 183 that identifies the amount of electric energy generated in the renewable energy supply section 91, and is disposed in the renewable energy supply section 91. The renewable energy manager 180 is communicably connected to the energy management controller 100 via the communication network 111.

The discharged product manager 150 includes a processor 151 such as a CPU, a memory 152 such as a ROM and a RAM, a thermal energy production identification section 153, and a carbon dioxide discharge identification section 154, and is disposed in the discharged product supply section such as a thermal power plant and a nuclear power plant. The discharged product manager 150 is communicably connected to the energy management controller 100 via the communication network 111. The thermal energy production identification section 153 identifies the amount of thermal energy discharged from the discharged product supply section such as a thermal power plant and a nuclear power plant. The carbon dioxide discharge identification section 154 identifies the amount of carbon dioxide discharged from the discharged product supply section such as a thermal power plant.

The consumer facility is a facility that consumes residual electric energy after using electric energy generated by the heat engine 20 in the electrolytic reduction apparatus 70, or consumes residual thermal energy after using thermal energy given by the heat pump 10 in the electrolytic reduction apparatus 70, or consumes both the energies, and examples of the consumer facility include factories, office buildings, houses, power feed devices for electric vehicles, and plant factories. To a factory, an office building, a house, or a plant factory among them, for example, heat stored in the heat utilization cycle 30 is supplied upon a request from it. The heat may be supplied to the consumer by delivering a heat storage material capable of storing heat to the location of the consumer facility. To a factory, an office building, a house, a power feed device for an electric vehicle, or a plant factory, electric energy generated by the heat engine 20 is supplied upon a request from it. The electric energy may be supplied by delivering to the location of the consumer facility with an electric wire, a storage battery, or the like. The heat storage material, electric wire, and storage battery are each used as an energy network facility. Upon a request from a consumer, a carbon-containing material obtained from the electrolytic reduction apparatus 70 is supplied by, for example, transporting it.

The consumer terminal 160 includes a processor 161 such as a CPU, a memory 162, an input section 163, and so on, and is disposed in the consumer facility. The consumer terminal 160 is communicably connected to the energy management controller 100 via the communication network 111. The input section 163 is configured with a touch panel, a keyboard, or the like, and receives at least any one request of a request of supply of thermal energy, a request of supply of electric energy, and a request of a carbon-containing material obtained through electrolytic reduction from a consumer as the owner of the consumer terminal 160.

The energy management controller 100 includes a processor 101 such as a CPU (Central Processing Unit) and a memory 102 such as a ROM and a RAM. The energy management controller 100 is communicably connected to the heat pump 10, the heat engine 20, the heat utilization cycle 30, the waste heat supply section 92, the carbon dioxide processor 40 including the carbon dioxide recovery apparatus 50 and the electrolytic reduction apparatus 70, and so on. The energy management controller 100 performs operation control for the heat pump 10, the heat engine 20, the heat utilization cycle 30, the waste heat supply section 92, the carbon dioxide processor 40 including the carbon dioxide recovery apparatus 50 and the electrolytic reduction apparatus 70, and so on with reference to pieces of information received via the communication network 111.

Referring to the amount of electric energy identified by the electric energy production identification section 183 in the renewable energy manager 180, the energy management controller 100 performs drive control for the heat pump 10 by controlling the rotational frequency of the first compressor 12 in the heat pump 10 in order to convert the electric energy into thermal energy to be reserved. Although the amount of renewable energy to be obtained with the renewable energy manager 180 tends to fluctuate as compared with common electric energy provided by electric power companies, the renewable energy manager 180 allows energy supplied as renewable energy to be converted into thermal energy and stored in the heat utilization cycle 30 through the heat pump 10. Then, the thermal energy stored in the heating medium in the heat utilization cycle 30 can be used in subjecting the electrolytic solution to electrolytic reduction in the electrolytic reduction apparatus 70. Specifically, the thermal energy stored in the heating medium in the heat utilization cycle 30 is used for heating the electrolytic solution in the electrolytic reduction apparatus 70, and electric energy resulting from conversion of the thermal energy stored in the heating medium in the heat utilization cycle 30 by the heat engine 20 is used for voltage application to the electrolytic solution in the electrolytic reduction apparatus 70. Thereby, the requisite energy for heating the electrolytic solution in the electrolytic reduction apparatus 70 and voltage application thereto can be covered not by renewable energy with fluctuations but by the energy stored in the heat utilization cycle 30, and as a result, stable electrolytic reduction can be achieved. More specifically, data including a desired temperature for the electrolytic solution to be subjected to electrolytic reduction in the electrolytic reduction apparatus 70 and a desired voltage to be applied thereto are stored in advance in the memory 102 included in the energy management controller 100, and based on the data, the flow rate of the heating medium in the heating medium pump 32, the flow rate of the electrolytic solution in the electrolytic solution pump 42, the supply of the cooling potential to the electrolytic solution cooling section 94, and so on are controlled in such a manner that the temperature conditions and applied voltage conditions for the electrolytic solution are satisfied.

The energy management controller 100 regulates the supply of thermal energy from waste heat to the waste heat supply section 92 by controlling the discharge gas transporter and so on with reference to pieces of information on the amount of thermal energy discharged from the discharged product supply section such as a thermal power plant and a nuclear power plant and rotational frequency control for the first compressor 12, each piece of information identified by the thermal energy production identification section 153.

In addition, the energy management controller 100 regulates the supply of carbon dioxide to the carbon dioxide feed line 81 by controlling the carbon dioxide transporter and so on on the basis of the amount of carbon dioxide discharged from the discharged product supply section such as a thermal power plant, the amount identified by the carbon dioxide discharge identification section 154.

When the amount of thermal energy identified by the thermal energy production identification section 153 is sufficient, the energy management controller 100 can give enhanced operation efficiency by allowing the first refrigerant in the first intermediate heat exchanger 14 in the heat pump 10 to be heated or allowing the heating medium in the low-temperature tank 35 and high-temperature tank 37 to be heated in the heat utilization cycle 30.

### (Additional remarks)

Thus, the embodiments of the present disclosure have been described; however, it will be understood that various modifications in modes and details can be made without departing from the spirit and scope of the present disclosure that are described in Claims.

### REFERENCE SIGNS LIST

1 Energy utilization system
10 Heat pump
12 First compressor
13 First high-temperature heat exchanger
15 Expansion valve
20 Heat engine
23 Second high-temperature heat exchange section
24 Expander
30 Energy utilization cycle (circulation circuit)
32 Heating medium pump
34 Low-temperature-utilizing heat exchanger
35 Low-temperature tank
36 High-temperature-utilizing heat exchange section (temperature adjustment section)
37 High-temperature tank (storage section)
40 Carbon dioxide processor
41 Electrolytic solution circuit
42 Electrolytic solution pump
43 Electrolytic solution heat exchanger
50 Carbon dioxide recovery apparatus
70 Electrolytic reduction apparatus
70x Thermostatic container
71 Anode (first electrode)
71x Anode recovery line (first gas passage)
71a Anode catalyst layer
71b Anode gas diffusion layer
72 Cathode (second electrode)
72a Cathode catalyst layer
72b Cathode gas diffusion layer
72x Cathode recovery line (second gas passage)
73 Electrolytic solution passage
79 Electrolyzer casing (casing)
81 Carbon dioxide feed line
82 Air discharge line
83 First recovery line
84 Second recovery line
91 Renewable energy supply section
92 Waste heat supply section
93 Second refrigerant cooling section
94 Electrolytic solution cooling section
100 Energy management controller

### CITATION LIST

### PATENT LITERATURE

[Patent Literature 1] JPA No. 2016-89230
[Patent Literature 1] JPA No. 2023-15104

## Claims

1. An energy utilization system (1) comprising: a circulation circuit (30) including a temperature adjustment section (36) that adjusts temperature of a heating medium by using renewable energy or energy obtained from waste heat, wherein the heating medium circulates in the circulation circuit; and an electrolytic reduction apparatus (70) that performs electrolytic reduction of an electrolytic solution in which carbon dioxide is dissolved, wherein
the electrolytic reduction apparatus performs electrolytic reduction of the electrolytic solution temperature-adjusted through thermal contact with the heating medium, and
the electrolytic reduction apparatus includes:
a casing (79) that is cylindrical and extends in a first direction;
a first electrode (71) that is provided within the casing and extends in the first direction;
a second electrode (72) that is cylindrical and positioned within the casing and on an outside of the first electrode as viewed in the first direction, and extends in the first direction; and
an electrolytic solution passage (73) that allows the electrolytic solution to flow in the first direction between the first electrode and the second electrode.

2. The energy utilization system according to claim 1, wherein
the first electrode is an anode, and
the second electrode is a cathode.

3. The energy utilization system according to claim 2, wherein
the anode is cylindrical and extends in the first direction, and
the electrolytic reduction apparatus includes a first gas passage (71x) that is provided on an inside of the anode as viewed in the first direction and allows a gas generated through oxidation reaction of the electrolytic solution to pass through the first gas passage.

4. The energy utilization system according to claim 3, wherein
the anode includes: an anode catalyst layer (71a) that is cylindrical and extends in the first direction; and an anode gas diffusion layer (71b) that is cylindrical and positioned on an inside of the anode catalyst layer and on an outside of the first gas passage as viewed in the first direction, and extends in the first direction.

5. The energy utilization system according to any one of claims 2 to 4, wherein
the electrolytic reduction apparatus includes a second gas passage (72x) that is provided on an outside of the cathode and on an inside of the casing as viewed in the first direction, and allows a gas generated through reduction reaction of the electrolytic solution to pass through the second gas passage.

6. The energy utilization system according to claim 5, wherein
the cathode incudes: a cathode catalyst layer (72a) that is cylindrical and extends in the first direction; and a cathode gas diffusion layer (72b) that is cylindrical and is provided on an outside of the cathode catalyst layer and on an inside of the second gas passage, and extends in the first direction.

7. The energy utilization system according to any one of claims 1 to 6, further comprising a heat pump (10) that is driven by using electric power generated with the renewable energy and allows a first refrigerant to circulate therein, wherein
the temperature adjustment section adjusts temperature of the heating medium with heat from the first refrigerant temperature-adjusted by the heat pump.

8. The energy utilization system according to any one of claims 1 to 7, comprising
a heat engine (20) that generates electric power by using heat from the heating medium, wherein
the electrolytic reduction apparatus applies a voltage to the electrolytic solution by using electric power generated by the heat engine.

9. The energy utilization system according to any one of claims 1 to 8, wherein
the circulation circuit includes a storage section (37) that stores heat from the heating medium as stored energy.

10. A method for producing a carbon-containing material, comprising:
adjusting temperature of a heating medium circulating in a circulation circuit (30) by using renewable energy or energy obtained from waste heat;
adjusting temperature of an electrolytic solution in which carbon dioxide is dissolved through thermal contact with the heating medium; and
performing electrolytic reduction of the temperature-adjusted electrolytic solution, wherein
in the performing of electrolytic reduction, the electrolytic solution flows in a first direction between a first electrode (71) that extends in the first direction and a second electrode (72) that is cylindrical and extends in the first direction in such a manner that the second electrode shields the first electrode from surroundings as viewed in the first direction.

11. The method for producing a carbon-containing material according to claim 10, wherein
the first electrode is an anode, and
the second electrode is a cathode.

12. The method for producing a carbon-containing material according to claim 10 or 11, wherein
the temperature of the heating medium is adjusted with heat from a first refrigerant by using a heat pump (10) that allows the first refrigerant to circulate therein, and
the heat pump is driven by using electric power generated with the renewable energy.

13. The method for producing a carbon-containing material according to any one of claims 10 to 12, further comprising:
generating electric power in the heat engine (20) by using heat from the heating medium, wherein
in the performing of electrolytic reduction, a voltage is applied to the electrolytic solution by using electric power generated by the heat engine.

14. The method for producing a carbon-containing material according to claim 13, wherein
the circulation circuit includes a storage section (37) that stores heat from the heating medium as stored energy.
